# EUROPÄISCHE PATENTSCHRIFT

(11) **EP 0 784 172 B1**
(45) Veröffentlichungstag und Bekanntmachung des Hinweises auf die Patenterteilung: **02.05.2003**
(21) Anmeldenummer: 96118426.4
(22) Anmeldetag: 16.11.1996
(51) Int. Cl.: F16K 5/04, F16K 27/06

(54) **Absperrorgan grosser Nennweite an einem Palettenbehälter**
Large diameter shut-off valve on a pallet-container
Soupape d'arrêt à grand diamètre sur une caisse-palette

(30) Priorität: 10.01.1996 DE 19600642
(43) Veröffentlichungstag der Anmeldung: 16.07.1997
(73) Patentinhaber: SOTRALENTZ S.A., F-67320 Drulingen (FR)
(72) Erfinder: Decroix, Claude, 67700 Saverne (FR); Roser, Philippe, 67290 Volksberg (FR)
(74) Vertreter: Honke, Manfred, Dr.-Ing.

(56) Entgegenhaltungen:
- FR-A- 1 141 388
- FR-A- 1 306 962
- FR-A- 1 373 417
- FR-A- 2 334 040
- GB-A- 1 222 559
- GB-A- 1 369 873
- US-A- 3 066 908
- US-A- 3 380 704
- US-A- 4 890 817

## Beschreibung

Die Erfindung betrifft ein Absperrorgan großer Nennweite mit Hahngehäuse, Hahnküken und Abschlußdeckel für einen Palettenbehälter, welche Bauteile als Spritzgußformteile aus thermoplastischem Kunststoff ausgeformt sind, sowie mit einem an ein Anschlußelement des Hahnkükens, welches durch eine Öffnung im Abschlußdeckel aus dem Hahngehäuse herausgeführt ist, angeschlossenen Handgriff. - Absperrorgane des beschriebenen Aufbaus werden insbes. bei Palettenbehältern aus Palette, Behältermantel, der z. B. aus einer Drahtgittermatte besteht, und einem blasgeformten thermoplastischen Kunststoffbehälter verwendet, welcher Palettenbehälter zum Transport von flüssigen Stoffen dient, Behältervolumen z. B. 1 m³ und mehr. Solche Palettenbehälter sind, ebenso wie ihre Absperrorgane, Produkte einer industriellen Serienfertigung. Die Absperrorgane sind für hohe Mengenströme eingerichtet und müssen bei hohen Druckbeanspruchungen, die aus Füllhöhe der flüssigen Stoffe und deren spezifischem Gewicht resultieren, dicht sein, und zwar auch bei dynamischen Beanspruchungen. Bei dem aus der Praxis bekannten Absperrorgan ist das Hahnküken als Hohlformspritzteil ausgeführt. Es weist einen zylindrischen Hohlkörper mit deckelseitig angeformter Abschlußplatte auf, der auf der dem Deckel gegenüberliegenden Seite offen ist. Die zylindrische Wand des Hohlformspritzteils besitzt lediglich Aussparungen, die das Durchströmen des fluiden Mediums erlauben. Da der zylindrische Hohlkörper auf der dem Deckel abgewandten Seite offen ist, kann sich unten im Hahngehäuse bzw. im Hahnküken ein Sumpf aus nicht abgelaufener Flüssigkeit halten. Sind hohe Drücke zu beherrschen, so können z. B. bei zusätzlichen Beanspruchungen des Palettenbehälters beim Transport und bei der Handhabung Undichtigkeiten auftreten, insbes. kann die Flüssigkeit aus dem Sumpf austreten, der sich im beschriebenen Bereich des Hahngehäuses bzw. des Hahnkükens ausgebildet hat. Diese Probleme lassen sich bei dem bekannten Absperrorgan dadurch vermeiden, daß Hahngehäuse und Hahnküken mit hohem Werkstoffeinsatz dickwandig geformt werden und/oder in verformungsgefährdeten Bereichen, z. B. am deckelseitigen Rand, mit einer Schelle umgeben werden, die eine Verformungen verhindernde Umreifung darstellt. Das ist aufwendig.

Ferner kennt man (vgl. US-A-3066908) ein oberbegriffsmäßiges Absperrorgan mit einem Hahngehäuse und einem Hahnküken, welches nicht für einen Palettenbehälter aus Kunststoff vorgesehen ist. Die Sicherung des Hahnkükens in vertikaler Richtung erfolgt über eine Sprengringanordnung sowie mittels einer Befestigungsschraube. Derartige Maßnahmen sind aufwendig.

Schließlich ist ein Absperrorgan mit Hahngehäuse und Hahnküken bekannt,wobei auf einen separaten Abschlußdeckel verzichtet wird. Die Vertikalsicherung erfolgt lediglich über eine Ringausnehmung im Hahngehäuse, in welche das Hahnküken mit einem elastischen Ringbund eingreift (vgl. US-A-4 890 817).

Der Erfindung liegt das technische Problem zugrunde, ein Absperrorgan des eingangs beschriebenen Aufbaus und der eingangs beschriebenen Zweckbestimmung zu schaffen, das im Rahmen einer industriellen Serienfertigung bei geringem Werkstoffeinsatz sehr verformungsfest und stabil eingerichtet werden kann und auch bei extrem hohen Beanspruchungen dicht bleibt.

Zur Lösung dieses technischen Problems ist Gegenstand der Erfindung ein Absperrorgan großer Nennweite mit Hahngehäuse, Hahnküken und Abschlußdeckel für einen Palettenbehälter, welche Bauteile als Spritzgußformteile aus thermoplastischem Kunststoff ausgeführt sind, sowie mit einem an ein Anschlußelement des Hahnkükens, welches durch eine Öffnung im Abschlußdeckel aus dem Hahngehäuse herausgeführt ist, angeschlossenen Handgriff,
- wobei das Hahnküken als Vollformspritzteil ausgeführt ist, welches einen eingeformten Durchflußkanal und zumindest deckelseitig sowie auf der dem Abschlußdeckel gegenüberliegenden Seite die eingesetzte Kunststoffmasse reduzierende Auskammerungen aufweist,
- wobei ferner die deckelseitige Auskammerung ringförmig das Anschlußelement durchläuft sowie von der Hahnkükenwand umgeben ist, die einen den deckelseitigen Rand des Hahngehäuses überfassenden Abschlußbund aufweist und
- wobei der Abschlußdeckel mit dem deckelseitigen Rand des Hahngehäuses einen Stütz- und Dichtbund unter Zwischenschaltung des Abschlußbundes bildet.

Die Erfindung geht von der Erkenntnis aus, daß bei Ausbildung des Hahnkükens als Vollformspritzteil, welches einen eingeformten Durchflußkanal aufweist und im übrigen wie beschrieben ausgebildet ist, ein Hahnküken hoher Gestaltfestigkeit entsteht, welches trotz des durch die Auskammerungen reduzierten Werkstoffeinsatzes allen Anforderungen genügt. Es versteht sich, daß übliche Dichtungsringe, z. B. O-Ringe, nach den Regeln der Dichtungstechnik im Hauptschluß oder Nebenschluß angeordnet werden. Das Hahnküken in dem erfindungsgemäßen Absperrorgan ist ausgesprochen freundlich in bezug auf eine Spritzgußfertigung. Ein Sumpf, in dem sich Flüssigkeit, leckstrombildend, sammeln könnte, ist nicht mehr vorhanden.

Im einzelnen kann das erfindungsgemäße Absperrorgan auf verschiedene Weise weiter ausgebildet und gestaltet werden.

Die auf der dem Deckel gegenüberliegenden Seite angeordnete Auskammerung bildet den Durchflußkanal zumindest bereichsweise begrenzende Durchflußkanalwände. Die auf der dem Deckel gegenüberliegenden Seite angeordnete Auskammerung besitzt nach bevorzugter Ausführungsform der Erfindung Anschlagelemente, welche den Drehbereich des Hahnkükens begrenzen und/oder vorgegebene Stellungen des Hahnkükens für die Mengenstromeinstellung des Fluids definieren. Im allgemeinen weist das Hahngehäuse auf der dem Deckel gegenüberliegenden Seite einen angeformten Boden auf. - Es versteht sich, daß das erfindungsgemäße Absperrorgan im Hahnküken einen Durchflußkanal oder einen verzweigten Durchflußkanal, auch mit unterschiedlichem Strömungsquerschnitt in den Durchflußkanalzweigen aufweisen kann.

Im folgenden wird die Erfindung anhand einer lediglich ein Ausführungsbeispiel darstellenden Zeichnung ausführlicher erläutert. Es zeigen in schematischer Darstellung
- Fig. 1: einen Längsschnitt durch ein erfindungsgemäßes Absperrorgan in Strömungsrichtung,
- Fig. 2: in gegenüber der Fig. 1 verkleinertem Maßstab und bei abgenommenem Handgriff eine Draufsicht auf den Gegenstand der Fig. 1 und
- Fig. 3: einen Schnitt in Richtung A-A durch den Gegenstand der Fig. 2.

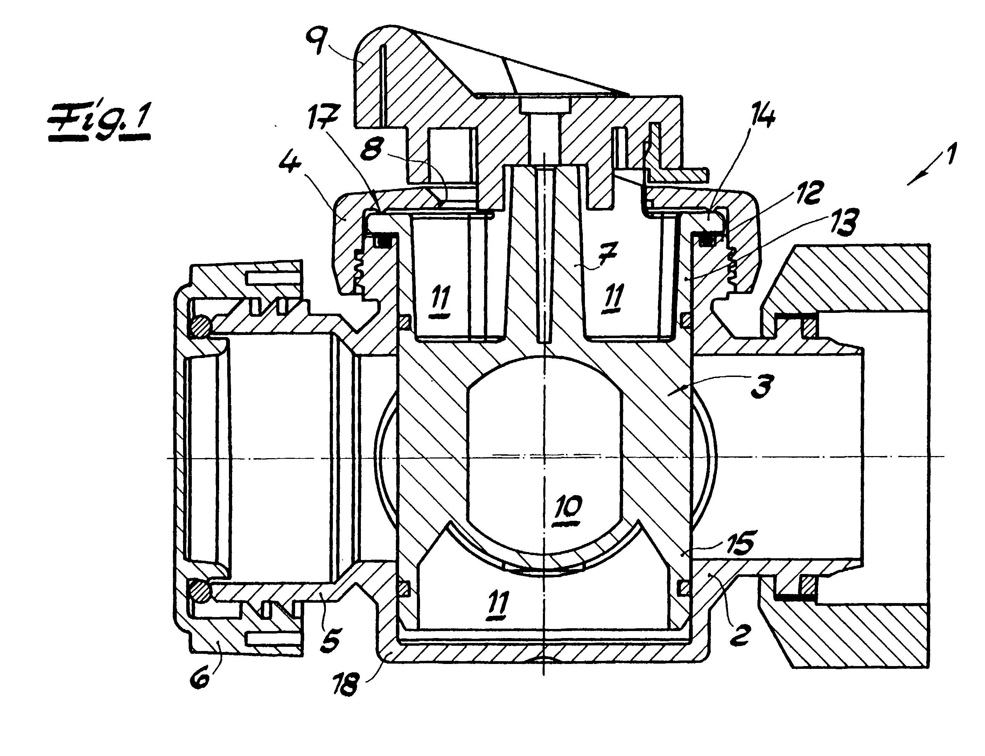

Das in den Figuren dargestellte Absperrorgan 1 ist ein Absperrorgan großer Nennweite. Im grundsätzlichen Aufbau besteht es aus einem Hahngehäuse 2, einem Hahnküken 3 und einem Abschlußdeckel 4. Das dargestellte Absperrorgan 1 ist zum Einsatz an einem Palettenbehälter bestimmt. Der Anschluß ist in Fig. 1 rechts angedeutet. Links erkennt man den Auslaufstutzen 5 des Absperrorgans 1 mit aufgesetztem Deckel 6.

Die beschriebenen Bauteile des Absperrorgans 1 sind als Spritzgußformteile aus thermoplastischem Kunststoff ausgeführt. Zum Absperrorgan 1 gehört fernerhin ein Anschlußelement 7 des Hahnkükens 3, welches durch eine Öffnung 8 im Abschlußdeckel 4 aus dem Hahngehäuse 2 herausgeführt ist. An das Anschlußelement 7 ist ein Handgriff 9 angeschlossen.

Das Hahnküken 3 ist als Vollformspritzteil ausgeführt, welches einen eingeformten Durchflußkanal 10 und zumindest deckelseitig sowie auf der dem Abschlußdeckel 4 gegenüberliegenden Seite die Kunststoffmasse reduzierende Auskammerungen 11 aufweist. Der Abschlußdeckel 4 bildet mit dem deckelseitigen Rand 12 des Hahngehäuses 2 einen Stütz- und Dichtbund, der so ausgelegt ist, daß durch die auftretenden Beanspruchungen Verformungen nicht auftreten können.

Die deckelseitige Auskammerung 11 umläuft ringförmig das Anschlußelement 7. Die Auskammerung 11 ist von der Hahnkükenwand 13 umgeben, die einen Abschlußbund 14 aufweist.

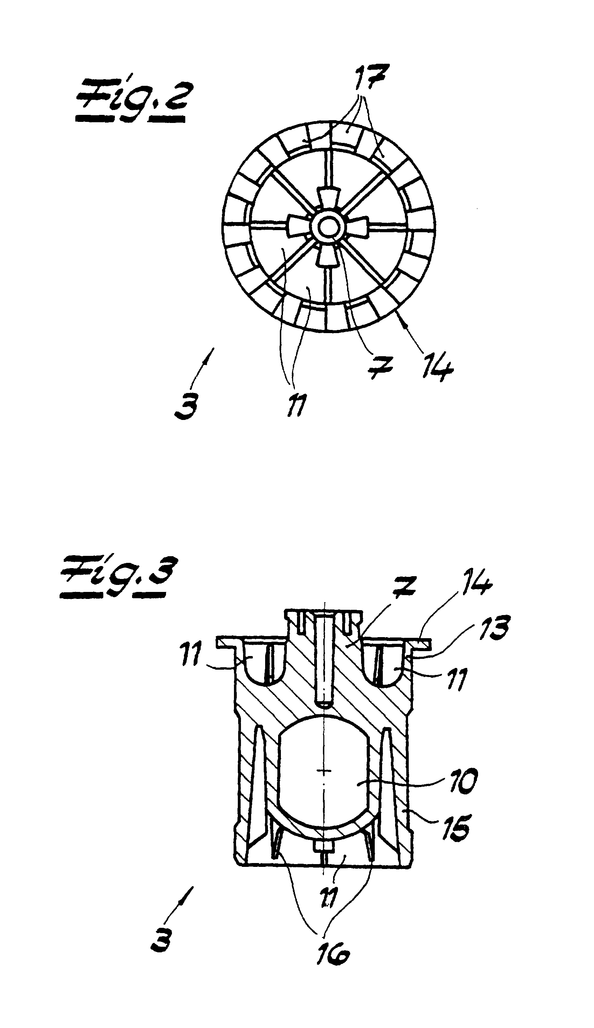

Die auf der dem Abschlußdeckel 4 gegenüberliegenden Seite angeordnete Auskammerung 11 bildet den Durchflußkanal 10 zumindest bereichsweise begrenzende Durchflußkanalwände 15. Ein Sumpf im Hahngehäuse 2 bzw. im Hahnküken 3 kann sich nicht mehr ausbilden. Die auf der dem Abschlußdeckel 4 gegenüberliegenden Seite angeordnete Auskammerung 11 besitzt Anschlagelemente 16, die an dem Hahnküken 3 ausgespart sind. Dazu wird auf die Fig. 3 verwiesen. Man erkennt, daß die Anschlagelemente 16 den Drehbereich des Hahnkükens 3 begrenzen und/oder vorgesehene Stellungen des Hahnkükens 3 für die Mengenstromsteuerung des Fluids definieren können. Es versteht sich, daß im Hahngehäuse 2 Gegenelemente angeordnet sind. In der Fig. 2 erkennt man, daß am oberen Rand des Hahnkükens 3 auch Rastausnehmungen 17 vorgesehen sein können, die bestimmte Einstellungen des Hahnkükens 3 mit Hilfe des Handgriffes 9 ermöglichen. Das Hahngehäuse 2 besitzt auf der dem Abschlußdeckel 4 abgewandten Seite einen Boden 18, der angeformt ist.

## Patentansprüche

1. Absperrorgan (1) großer Nennweite mit Hahngehäuse (2), Hahnküken (3) und Abschlußdeckel (4) für einen Palettenbehälter, welche Bauteile als Spritzgußformteile aus thermoplastischem Kunststoff ausgeführt sind, sowie mit einem an ein Anschlußelement (7) des Hahnkükens, welches durch eine Öffnung (8) im Abschlußdeckel (4) aus dem Hahngehäuse (2) herausgeführt ist, angeschlossenen Handgriff (9),
- wobei das Hahnküken (3) als Vollformspritzteil ausgeführt ist, welches einen eingeformten Durchflußkanal (10) und zumindest deckelseitig sowie auf der dem Abschlußdeckel (4) gegenüberliegenden Seite die Kunststoffmasse reduzierende Auskammerungen (11) aufweist,
**dadurch gekennzeichnet,**
- **daß** ferner die deckelseitige Auskammerung (11) ringförmig das Anschlußelement (7) durchläuft sowie von der Hahnkükenwand (13) umgeben ist, die einen den deckelseitigen Rand (12) des Hahngehäuses (2) überfassenden Abschlußbund (14) aufweist und
- **daß** der Abschlußdeckel (4) mit dem deckelseitigen Rand (12) des Hahngehäuses (2) einen Stütz- und Dichtbund unter Zwischenschaltung des Abschlußbundes (14) bildet.

2. Absperrorgan nach Anspruch 1, **dadurch gekennzeichnet, daß** die auf der dem Deckel (4) gegenüberliegenden Seite angeordnete Auskammerung (11) den Durchflußkanal (10) zumindest bereichsweise begrenzende Durchflußkanalwände (15) bildet.

3. Absperrorgan nach Anspruch 1 oder 2, **dadurch gekennzeichnet, daß** die auf der dem Deckel (4) gegenüberliegenden Seite angeordnete Auskammerung (11) Anschlagelemente (16) an den Hahnküken (3) ausspart, welche den Drehbereich des Hahnkükens (3) begrenzende und/oder vorgebende Stellungen des Hahnkükens (3) für die Mengenstromsteuerung des Fluids definiert.

4. Absperrorgan nach einem der Ansprüche 1 bis 3, **dadurch gekennzeichnet, daß** das Hahngehäuse (2) aus der dem Deckel (4) gegenüberliegenden Seite einen angeformten Boden (18) aufweist.

## Claims

1. A shut-off element (1) of large nominal diameter, comprising a stopcock housing (2), a stopcock plug (3) and a sealing cover (4), for a palletised container, which components are produced as injection moulded parts from a thermoplastic plastics material, and also comprising a handle (9) which is attached to a connection element (7) of the stopcock plug, which connection element is led out of the stopcock housing (2) through an opening (8) in the sealing cover (4),
- wherein the stopcock plug (3) is produced as a solid pattern injection moulded part which comprises a moulded-in flow channel (10) and chamber recesses (11) which reduce the mass of the plastics material at least on the side of the cover and on the opposite side to the sealing cover (4),
- **characterised in that** in addition the chamber recess (11) on the cover side encircles the connecting element (7) in the form of a ring and is surrounded by the stopcock plug wall (13), which comprises a sealing collar (14) which fits over the edge (12) of the stopcock housing (2) on the cover side, and
- that the sealing cover (4) and the edge (12) of the stopcock housing (2) on the cover side, with the sealing collar (14) interposed therebetween, form a supporting and sealing collar.

2. A shut-off element according to claim 1, **characterised in that** the chamber recess (11) disposed on the opposite side to the cover (4) forms flow channel walls (15) which delimit the flow channel (10) at least in part.

3. A shut-off element according to claim 1 or 2, **characterised in that** the chamber recess (11) on the opposite side to the cover (4) leaves stop elements (16) in place on the stopcock plug (3), which define positions of the stopcock plug (3) which delimit and/or predetermine the range of rotation of the stopcock plug (3) for controlling the mass flow of the fluid.

4. A shut-off element according to any one of claims 1 to 3, **characterised in that** the stopcock housing (2) comprises an integrally formed base (18) on the opposite side to the cover (4).

## Revendications

1. Soupape d'arrêt (1) à grand diamètre avec un corps de robinet (2), un boisseau de robinet (3) et un couvercle de fermeture (4) pour un conteneur-palette, ces composants se présentant sous la forme d'éléments formés par moulage par injection à partir de matière synthétique thermoplastique, avec également une poignée de prétension (9) reliée à un élément de connexion (7) du boisseau de robinet, laquelle ressort du corps de robinet (2) par une ouverture (8) pratiquée dans le couvercle de fermeture (4),
le boisseau du robinet (3) se présentant sous la forme d'une pièce moulée par injection en moule plein, laquelle présente un canal d'écoulement venu de moulage (10) et au moins sur le côté du couvercle ainsi que sur le côté opposé au couvercle de fermeture (4) des cavités (11) réduisant la masse de matière plastique,
**caractérisé en ce que**, de plus la cavité (11) située du côté du couvercle entoure l'élément de connexion (7) de façon annulaire tout en étant encerclée par la paroi du boisseau du robinet (13), laquelle présente un épaulement de fermeture (14) recouvrant le bord (12) du corps de robinet (2) situé du côté du couvercle, et **en ce que** le couvercle de fermeture (4) forme avec le bord (12) du corps de robinet (2) situé du côté du couvercle un épaulement d'appui et d'étanchéité avec interposition de l'épaulement de fermeture (14)

2. Soupape d'arrêt selon la revendication 1, **caractérisée en ce que** la cavité (11) située sur le côté opposé au couvercle (4) forme des parois (15) de canal d'écoulement délimitant au moins en partie le canal d'écoulement (10).

3. Soupape d'arrêt selon la revendication 1 ou 2, **caractérisé en ce que** la cavité (11) située sur le côté opposé au couvercle (4) ménage des éléments de butée (16) sur le boisseau de robinet (3), lesquels définissent des positions du boisseau de robinet (3) délimitant et/ou déterminant la zone de rotation du boisseau du robinet (3) pour la régulation du flux de masse du fluide.

4. Soupape d'arrêt selon l'une des revendications 1 à 3, **caractérisée en ce que** le corps de robinet (2) présente un fond moulé (18) à partir du côté opposé au couvercle (4).
